# EUROPEAN PATENT APPLICATION

(11) **EP 4 647 872 A1**
(43) Date of publication of application: **12.11.2025**
(21) Application number: 25170615.6
(22) Date of filing: 15.04.2025
(51) Int. Cl.: G06F 3/00

(54) **DISPLAY, METHOD FOR CONTROLLING TOUCH DEVICE AND METHOD FOR INPUT MAPPING CONFIGURATION**

(30) Priority: 07.05.2024 TW 113116822
(71) Applicant: Giga-Byte Technology Co., Ltd., New Taipei City (TW)
(72) Inventor: CHANG, Kuei-Shan, New Taipei City (TW); CHOU, Shih-Chieh, New Taipei City (TW); YANG, Bo, New Taipei City (TW); DING, Shengchun, New Taipei City (TW); LI, Xiang, New Taipei City (TW); LI, Xiaocheng, New Taipei City (TW); LIU, Bin, New Taipei City (TW)
(74) Representative: Müller Schupfner & Partner Patent- und Rechtsanwaltspartnerschaft mbB (Muc)

(57) **Abstract**

A display (1,2,3,4) includes: a memory (11,21,31,41) and a controller (12,22,32,42). The memory (11,21,31,41) is configured to store correspondence between keyboard-mouse commands and touch operations. The controller (12,22,32,42) is connected to the memory (11,21,31,41) and is configured to receive a keyboard-mouse signal, and correspondingly output a touch signal according to the correspondence, wherein the touch signal is configured to operate a touch device (A2) according to the touch operations.

## Description

### BACKGROUND

### 1. Technical Field

This disclosure relates to a display, method for controlling touch device and method for input mapping configuration.

### 2. Related Art

The current mobile gaming market is experiencing continuous growth, with many major computer games being ported to mobile devices, allowing numerous gamers to switch to mobile platforms. However, players face several issues when transitioning to mobile platforms, including players' long-standing familiarity with keyboard and mouse controls, making the players uncomfortable with touchscreen controls; the small screen size of mobile devices causing visual fatigue; and the strain on players' hands from holding the device for extended periods without a break.

Furthermore, although there are many screen mirroring applications available on the market, users are unable to define the mapping between touch operations and keyboard/mouse functions on their own. Additionally, to control mobile games from a computer, the mobile device must be connected to a computer, limiting the flexibility of gameplay.

### SUMMARY

Accordingly, this disclosure provides a display, method for controlling touch device and method for input mapping configuration.

According to one or more embodiment of this disclosure, a display includes a memory and a controller. The memory is configured to store a correspondence between a plurality of keyboard-mouse commands and a plurality of touch operations. The controller is connected to the memory, the controller is configured to receive a keyboard-mouse signal, and correspondingly output a touch signal according to the correspondence, the touch signal configured to operate a touch device according to the plurality of touch operations.

According to one or more embodiment of this disclosure, a method for input mapping configuration, performed by a display, includes: receiving a setting command designating a correspondence between a plurality of keyboard-mouse commands and a plurality of touch operations of a touch device; and storing the correspondence.

According to one or more embodiment of this disclosure, a method for controlling touch device, performed by a display, includes: triggered by a keyboard-mouse signal to generate a touch operation according to a correspondence between a plurality of keyboard-mouse commands and a plurality of touch operations; and outputting the touch operation to the touch device.

In view of the above description, through the correspondence between the keyboard-mouse commands and the touch operations stored by the memory of the display, the user may control the touch device through a keyboard and mouse connected directly to the display, eliminating the need for a computer, thereby reducing the overall cost of computer equipment and improving the ease of controlling the touch device for a better user experience. According to the method for input mapping configuration of one or more embodiments of the present disclosure, the user may customize the mapping between the keyboard-mouse commands and the touch operations, providing high flexibility and enhancing the playability of mobile games.

### BRIEF DESCRIPTION OF THE DRAWINGS

The present disclosure will become more fully understood from the detailed description given hereinbelow and the accompanying drawings which are given by way of illustration only and thus are not limitative of the present disclosure and wherein:
FIG. 1 is a block diagram illustrating a display and a keyboard-mouse device according to an embodiment of the present disclosure;
FIG. 2 is a flowchart illustrating a method for controlling touch device according to an embodiment of the present disclosure;
FIG. 3 is a block diagram illustrating a display, a keyboard-mouse device and a touch device according to another embodiment of the present disclosure;
FIG. 4 is a flowchart illustrating a method of input mapping configuration according to an embodiment of the present disclosure;
FIG. 5 is a schematic diagram illustrating the application of the display according to an embodiment of the present disclosure; and
FIG. 6 is a schematic diagram illustrating the application of the display according to another embodiment of the present disclosure.

### DETAILED DESCRIPTION

In the following detailed description, for purposes of explanation, numerous specific details are set forth in order to provide a thorough understanding of the disclosed embodiments. According to the description, claims and the drawings disclosed in the specification, one skilled in the art may easily understand the concepts and features of the present invention. The following embodiments further illustrate various aspects of the present invention, but are not meant to limit the scope of the present invention.

The display and method of controlling touch device described according to one or more embodiments of the present disclosure below may be applied to converting the command comes from a keyboard-mouse device into a touch operation that can control a touch device according to a correspondence stored in a memory of a display. The method for input mapping configuration described according to one or more embodiments of the present disclosure may be applied to set said correspondence. The display, method for controlling touch device and method for input mapping configuration according to one or more embodiments of the present disclosure may be configured to control an application (for example, mobile game) of the touch device by using the keyboard-mouse device.

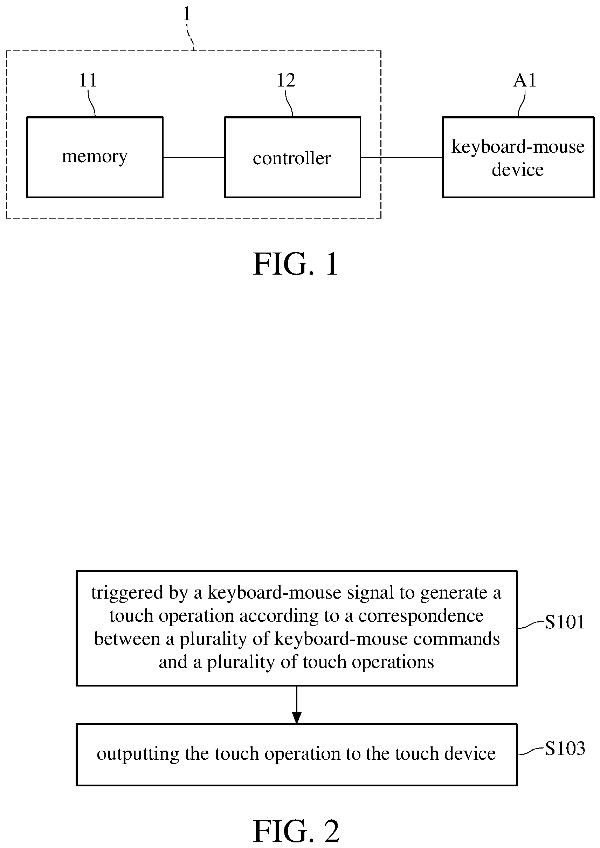

Please refer to FIG. 1, wherein FIG. 1 is a block diagram illustrating a display and a keyboard-mouse device according to an embodiment of the present disclosure. As shown in FIG. 1, a display 1 includes a memory 11 and a controller 12. The controller 12 is electrically connected to the memory 11 and a keyboard-mouse device A1, wherein the keyboard-mouse device A1 may include at least one of a keyboard and a mouse. The controller 12 may be further connected to the touch device for the keyboard-mouse device A1 to control the touch device through the display 1. The touch device may include a touch pad, a smart phone, a tablet etc., and the operating system running on the touch device may be Android operating system.

The memory 11 is configured to store a correspondence between a plurality of keyboard-mouse commands and a plurality of touch operations. The keyboard-mouse commands may be commands input through the keyboard-mouse device A1, such as commands input through right mouse button, left mouse button, spacebar on the keyboard, W key on the keyboard, and S key on the keyboard etc. The touch operations include gestures or controls on the touch device, such as a single tap, double tap, slide, swipe etc. The memory 11 may be an electrically-erasable programmable read-only memory (EEPROM) or any other non-volatile memory where the stored data can be modified.

The controller 12 is configured to receive the keyboard-mouse signal, and correspondingly output a touch signal according to the correspondence stored by the memory 11. The controller 12 may receive the keyboard-mouse signal from the keyboard-mouse device A1, convert the keyboard-mouse signal into the touch signal according to said correspondence, and output the touch signal to the touch device. The touch signal is configured to operate the touch device according to the touch operations. In other words, the touch signal is configured to simulate the touch operation of a finger or a touch pen on the touch device. The controller 12 may include one or more processor, said processor is, for example, a central processing unit (CPU), a microcontroller, a programmable logic controller, or any other processor with signal processing functions.

Please refer to FIG. 1 and FIG. 2, wherein FIG. 2 is a flowchart illustrating a method for controlling touch device according to an embodiment of the present disclosure. The method for controlling touch device is performed by the display 1 shown in FIG. 1, and as shown in FIG. 2, the method for controlling touch device includes: step S101: triggered by a keyboard-mouse signal to generate a touch operation according to a correspondence between a plurality of keyboard-mouse commands and a plurality of touch operations; and step S103: outputting the touch operation to the touch device.

In step S101, the controller 12 is triggered by the keyboard-mouse signal coming from the keyboard-mouse device A1 to convert the keyboard-mouse signal into a corresponding touch operation according to the correspondence between the keyboard-mouse commands and the touch operations stored by the memory 11. In step S103, the controller 12 outputs the touch operations to the touch device. For example, the correspondence stored by the memory 11 indicates right mouse button (keyboard-mouse command) corresponding to a single tap on the touch device (touch operation), the controller 12 converts the keyboard-mouse signal into a single tap on the touch device (touch operation) according to the correspondence stored by the memory 11 after triggered by the keyboard-mouse signal of the right mouse button. Then, the controller 12 outputs the touch operations to the touch device to simulate a finger or a touch pen touching the touch device.

Through the correspondence between the keyboard-mouse commands and the touch operations stored by the memory of the display, the user may control the touch device through a keyboard and/or a mouse connected directly to the display, eliminating the need for a computer, thereby reducing the overall cost of computer equipment and improving the convenience of controlling the touch device. Therefore, the user experience may be improved.

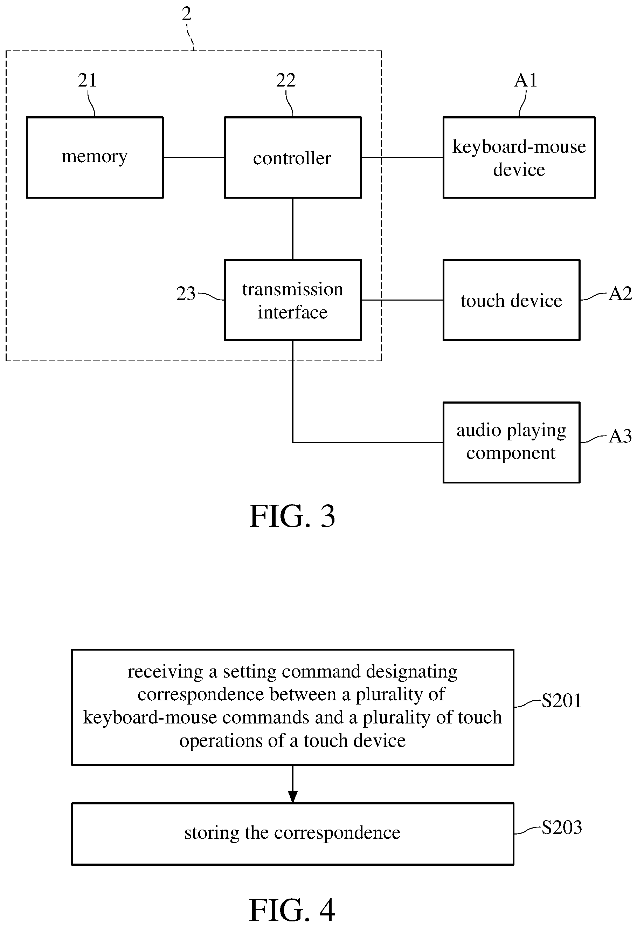

Please refer to FIG. 2 and FIG. 3, wherein FIG. 3 is a block diagram illustrating a display, a keyboard-mouse device and a touch device according to another embodiment of the present disclosure. As shown in FIG. 2, the display 2 includes a memory 21, a controller 22 and a transmission interface 23. The controller 22 is electrically connected to the memory 21, the transmission interface 23 and the keyboard-mouse device A1. The memory 21, the controller 22 and the keyboard-mouse device A1 of the display 2 may be the same as the memory 11, the controller 12 and the keyboard-mouse device A1 of the display 1 of FIG. 1, respectively, their details are not repeated herein.

The transmission interface 23 may be installed on a shell of the display 2, and the transmission interface 23 may also be a device external to the display 2 and connected to the display 2, wherein the memory 21 and the controller 22 may be disposed inside the shell (in a space formed by the shell). The transmission interface 23 is configured to connect the touch device A2 to the controller 22, output the touch signal to the touch device A2, and receive the video stream from the touch device A2. The touch device A2 may be the touch device described above and may include a touch pad, a smart phone, a tablet etc. The controller 22 may output the touch signal to the touch device A2 through the transmission interface 23.

In addition, the method for controlling touch device shown in FIG. 2 may further include the transmission interface 23 inputting the video stream coming from the touch device A2 to the display 2, so that the display 2 displays the screen of the touch device A2. In addition, when the transmission interface 23 is further connected to an audio playing component A3, the method for controlling touch device shown in FIG. 2 may further include the transmission interface 23 receiving an audio stream from the touch device A2, and outputting the audio stream to the audio playing component A3. The audio playing component A3 may include a speaker, a headphone, etc., to play the audio of the touch device A2 through the audio playing component A3.

Accordingly, when the touch device is connected to the display, the screen displayed by the touch device may be projected to the display. Further, the audio signal of the touch device may also be output to the audio playing component to play the audio. Therefore, during gaming, teammates' voice chat and game sound effects may be transmitted simultaneously, enabling sound localization and voice communication.

Please refer to FIG. 4, wherein FIG. 4 is a flowchart illustrating a method for input mapping configuration according to an embodiment of the present disclosure. The method for input mapping configuration is performed by the display 1 shown in FIG. 1 or the display 2 shown in FIG. 3, and as shown in FIG. 4, the method for input mapping configuration includes: step S201: receiving a setting command designating a correspondence between a plurality of keyboard-mouse commands and a plurality of touch operations of a touch device; and step S203: storing the correspondence. The following describes the input mapping configuration method using the display 2 shown in FIG. 3.

In step S201, the controller 22 receives the setting command designating the correspondence between the keyboard-mouse commands and the touch operations of the touch device A2 from a computer or the touch device A2. For example, keys W, S, A, D on the keyboard correspond to touch coordinates and operations for directions such as up, down, left, and right on the bottom left corner of the touch device. In other words, the setting command is configured to bind the keyboard-mouse command to the corresponding touch operation. In step S203, the controller 22 stores the correspondence into the memory.

Accordingly, the user may customize the mapping between the keyboard-mouse commands and the touch operations, providing high flexibility and enhancing the playability of mobile games.

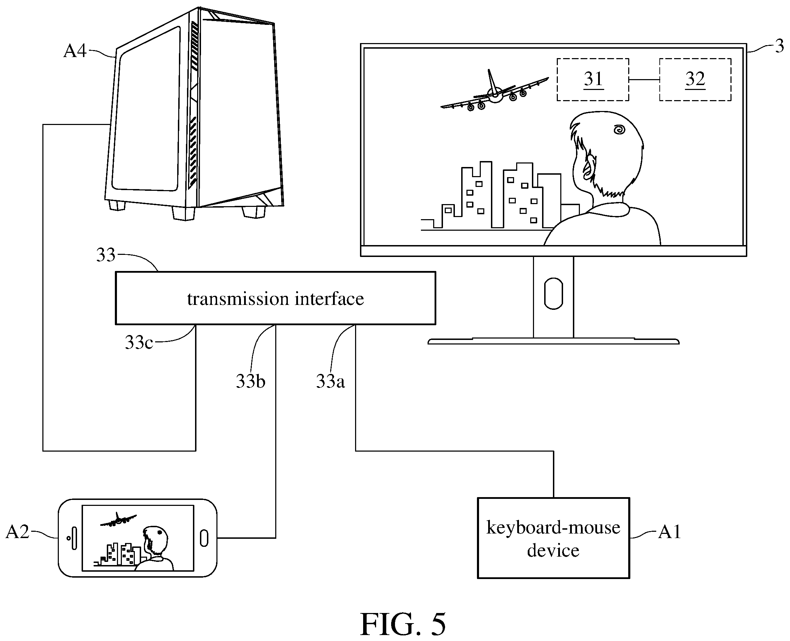

Please refer to FIG. 3, FIG. 4 and FIG. 5, wherein FIG. 5 is a schematic diagram illustrating the application of the display according to an embodiment of the present disclosure. The display 3 includes a memory 31, a controller 32 and a transmission interface 33. The memory 31 and the controller 32 may be the same as the memory 11 and the controller 12 of FIG. 1, respectively, their details are not repeated herein. It should be noted that FIG. 5 illustrates the transmission interface 33 as located outside of the display 3 for the purpose of description, the transmission interface 33 may be disposed on the shell of the display 3 or externally connected to the display 3 and connected to the controller 32.

The transmission interface 33 may include a first sub-interface 33a, a second sub-interface 33b and a third sub-interface 33c. The first sub-interface 33a may be configured to connect the controller 32 of the display 3 to the keyboard-mouse device A1, the second sub-interface 33b may be configured to connect the controller 32 of the display 3 to the touch device A2, and the third sub-interface 33c may be configured to connect the controller 32 of the display 3 to a computer A4. Each of the first sub-interface 33a, the second sub-interface 33b and the third sub-interface 33c may include a universal serial bus (USB) hub, wherein the USB hub of each of the first sub-interface 33a, the second sub-interface 33b and the third sub-interface 33c may be type A USB hub, type B USB hub or type C USB hub. In addition, the third sub-interface 33c may further include a connection port of high-definition multimedia interface (HDMI) or DisplayPort.

In the embodiment of FIG. 5, the display 3 is connected to the computer A4. It should be noted that the computer A4 may be installed with an application (referred to as "mobile game assistant program" below) having touch key setting function. In the method for input mapping configuration, the controller 32 may receive the setting command from the mobile game assistant program, meaning the user may input the setting command at the mobile game assistant program. Then, the controller 32 stores the correspondence into the memory 31.

In addition, in some embodiments, after the transmission interface 33 is simultaneously connected to the touch device A2 and the computer A4, and USB debug mode of the touch device A2 is activated, Java Archive (JAR) software package may be pushed from the computer A4 to the touch device A2, so that the touch device A2 stores and executes the software package. The software package is configured to encode (for example, by using FFmpeg program tool) the video stream collected from the touch device A2 and output the encoded video stream to the computer A4. The computer A4 may decode (for example, also by using FFmpeg program tool) the video stream, and render (for example, by using OpenGL protocol) the decoded video to obtain image(s), and the display screen of the display 3 may display the image(s). Therefore, during the method for input mapping configuration and the method for controlling touch device, the display 3 may display the screen of the touch device A2.

In addition, the controller 32 may be further configured to receive an update command from the touch device A2 or the computer A4, and update the correspondence stored in the memory 31 according to the update command. The update command may indicate adding another correspondence and deleting an existing correspondence or replacing the keyboard-mouse command and/or the touch operation. For example, the correspondence may indicate right mouse button (keyboard-mouse command) corresponding to a single tap on the touch device (touch operation), and the update command may include changing this keyboard-mouse command of the correspondence into the left mouse button. The update command is described by using FIG. 5 as an example, the embodiment of the update command may also be used in the embodiments of FIG. 1, FIG. 3 and FIG. 6.

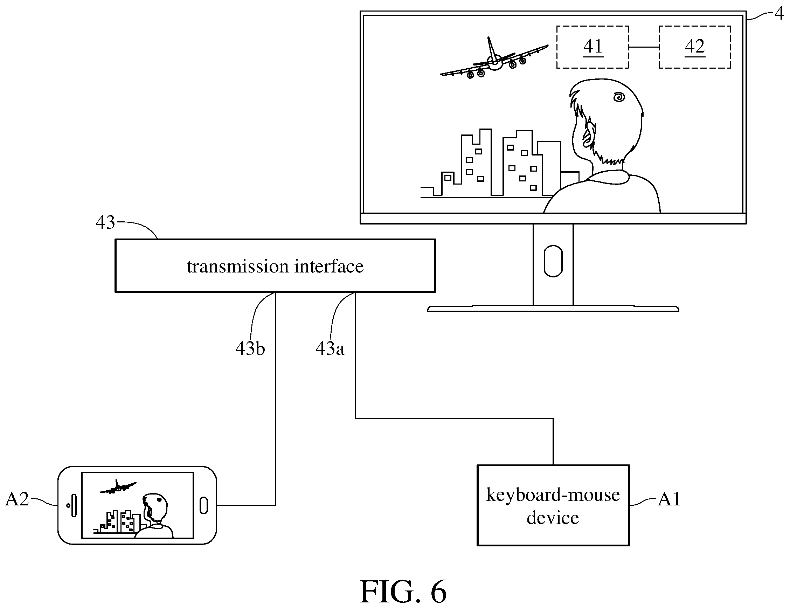

Please refer to FIG. 3, FIG. 4 and FIG. 6, wherein FIG. 6 is a schematic diagram illustrating the application of the display according to another embodiment of the present disclosure. The display 4 includes a memory 41, a controller 42 and a transmission interface 43. The memory 41 and the controller 42 may be the same as the memory 11 and the controller 12 of FIG. 1, respectively, their details are not repeated herein. It should be noted that FIG. 6 illustrates the transmission interface 43 as located outside of the display 4 for the purpose of description, the transmission interface 43 may be disposed on the shell of the display 4 or externally connected to the display 4 and connected to the controller 42.

The transmission interface 43 may include a first sub-interface 43a and a second sub-interface 43b. The first sub-interface 43a may be configured to connect the controller 42 of the display 4 to the keyboard-mouse device A1, the second sub-interface 43b may be configured to connect the controller 42 of the display 4 to the touch device A2. Each of the first sub-interface 43a and the second sub-interface 43b may include a USB hub, wherein the USB hub of each of the first sub-interface 43a and the second sub-interface 43b may be type A USB hub, type B USB hub or type C USB hub.

In the embodiment of FIG. 6, in the method for input mapping configuration, after the transmission interface 43 connecting the display 4 to the touch device A2, the controller 42 may receive the setting command from the touch device A2, meaning the user may input the setting command at the touch device A2, wherein the operation of the touch device A2 described above may be implemented with the application installed at the touch device A2. Then, the controller 42 stores the correspondence into the memory 41. In addition, during the method for input mapping configuration and the method for controlling touch device, the second sub-interface 43b may transmit the video stream of the touch device A2 to the controller 42, and therefore, the display 4 may display the screen of the touch device A2.

In the embodiments of FIG. 5 and FIG. 6, the transmission interface may further include another sub-interface configured to connect the audio playing component A3 shown in FIG. 3, wherein said another sub-interface may be type A USB hub, type B USB hub or type C USB hub. Accordingly, the transmission interface may receive the audio stream from the touch device A2, and output the audio stream to the audio playing component A3, for the audio playing component A3 to play the audio of the touch device A2.

In view of the above description, through the correspondence between the keyboard-mouse commands and the touch operations stored by the memory of the display, the user may control the touch device through a keyboard and/or a mouse connected directly to the display, eliminating the need for a computer, thereby reducing the overall cost of computer equipment and improving the convenience of controlling the touch device. Therefore, the user experience may be improved. Further, when the touch device is connected to the display, the screen displayed by the touch device may be projected to the display. Further, the audio signal of the touch device may also be output to the audio playing component to play the audio. Therefore, during gaming, teammates' voice chat and game sound effects may be transmitted simultaneously, enabling sound localization and voice communication. According to the method for input mapping configuration of one or more embodiments of the present disclosure, the user may customize the mapping between the keyboard-mouse commands and the touch operations, providing high flexibility and enhancing the playability of mobile games.

## Claims

1. A display (1,2,3,4), comprising:
a memory (11,21,31,41) configured to store a correspondence between a plurality of keyboard-mouse commands and a plurality of touch operations; and
a controller (12,22,32,42) connected to the memory (11,21,31,41), the controller (12,22,32,42) configured to receive a keyboard-mouse signal, and correspondingly output a touch signal according to the correspondence, the touch signal configured to operate a touch device (A2) according to the plurality of touch operations.

2. The display (1,2,3,4) according to claim 1, further comprising:
a transmission interface (23,33,43) configured to connect the touch device (A2) to the controller (12,22,32,42), output the touch signal to the touch device (A2) and receive a video stream from the touch device (A2).

3. The display (1,2,3,4) according to claim 2, wherein the transmission interface (23,33,43) is further configured to receive an audio stream from the touch device (A2), and output the audio stream to an audio playing component (A3).

4. The display (1,2,3,4) according to claim 1, wherein the controller (12,22,32,42) is further configured to receive an update command from the touch device (A2), and update the correspondence according to the update command.

5. The display (1,2,3,4) according to claim 1, wherein the controller (12,22,32,42) is further configured to receive an update command from a computer (A4), and update the correspondence according to the update command.

6. A method for input mapping configuration, performed by a display (1,2,3,4), comprising:
receiving a setting command designating a correspondence between a plurality of keyboard-mouse commands and a plurality of touch operations of a touch device (A2); and
storing the correspondence.

7. The method for input mapping configuration according to claim 6, wherein the setting command comes from a computer (A4) or the touch device (A2).

8. The method for input mapping configuration according to claim 6, further comprising:
receiving an update command; and
updating the correspondence according to the update command.

9. The method for input mapping configuration according to claim 8, wherein the update command comes from a computer (A4) or the touch device (A2).

10. A method for controlling touch device (A2), performed by a display (1,2,3,4), comprising:
triggered by a keyboard-mouse signal to generate a touch operation according to a correspondence between a plurality of keyboard-mouse commands and a plurality of touch operations; and
outputting the touch operation to the touch device (A2).

11. The method for controlling touch device (A2) according to claim 10, further comprising:
receiving a video stream from the touch device (A2); and
displaying the video stream.

12. The method for controlling touch device according to claim 10, further comprising:
receiving an audio stream from the touch device (A2); and
outputting the audio stream to an audio playing component (A3).

13. The method for controlling touch device (A2) according to claim 10, further comprising:
receiving an update command; and
updating the correspondence according to the update command.

14. The method for controlling touch device (A2) according to claim 13, wherein the update command comes from a computer (A4) or the touch device (A2).
